(19) 

**Europäisches Patentamt**
**European Patent Office**
**Office européen des brevets**

(11) **EP 4 080 411 A1**

(12) **EUROPEAN PATENT APPLICATION**
published in accordance with Art. 153(4) EPC

(43) Date of publication:
**26.10.2022 Bulletin 2022/43**

(21) Application number: **20902320.9**

(22) Date of filing: **17.12.2020**

(51) International Patent Classification (IPC):
*G06K 19/08* (2006.01)        *G06K 19/18* (2006.01)
*G06K 9/03* (2006.01)         *H03M 13/00* (2006.01)
*G06K 7/10* (2006.01)

(86) International application number:
**PCT/ES2020/070800**

(87) International publication number:
**WO 2021/123483 (24.06.2021 Gazette 2021/25)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **18.12.2019 ES 201931128**

(71) Applicants:
• **Universidad de Almeria**
  **04120 La Cañada de San Urbano (Almeria) (ES)**
• **Universidad de Granada**
  **18071 Granada (ES)**

(72) Inventors:
• **SALINAS CASTILLO, Alfonso**
  **18071 Granada (ES)**
• **MORALES SANTOS, Diego Pedro**
  **18071 Granada (ES)**
• **CASTILLO MORALES, María Encarnación**
  **18071 Granada (ES)**

• **GARCÍA RÍOS, Antonio**
  **18071 Granada (ES)**
• **CAPITÁN VALLVEY, Luis Fermín**
  **18071 Granada (ES)**
• **ORTIZ GÓMEZ, Inmaculada**
  **18071 Granada (ES)**
• **MARÍN SÁNCHEZ, Antonio**
  **18071 Granada (ES)**
• **ÁLVAREZ BERMEJO, José Antonio**
  **04120 Almería (ES)**
• **LÓPEZ RAMOS, Juan Antonio**
  **04120 Almería (ES)**
• **MANZANO AGUGLIARO, Francisco R.**
  **04120 Almería (ES)**
• **GARRIDO CÁRDENAS, José Antonio**
  **04120 Almería (ES)**
• **LÓPEZ DELGADO, Juan Luis**
  **04120 Almería (ES)**

(74) Representative: **Tribalyte Ideas**
  **Gta. Quevedo 8, 6°2**
  **28015 Madrid (ES)**

(54) **METHOD, DEVICE AND SYSTEM FOR STORING, ENCODING AND DECODING INFORMATION BASED ON CODES WITH ERROR DETECTION CAPACITY**

(57)     Described is a device formed by at least two layers, one of which is invariable and contains a visual code with error correction capacity, and at least one layer that is variable according to particular physical or chemical conditions. The invention also relates to a method for creating these devices and encoding the messages included in same; a method for reading or decoding the information contained in the devices; and a system capable of analysing and decoding the information contained in the messages of the device.

**FIG. 1**

EP 4 080 411 A1

**Description**

**FIELD OF THE INVENTION**

The present invention is comprised in the technical field corresponding to information encoding and decoding technologies and particularly in the field of massage transmission. More specifically, the invention relates to a device for storing information based on codes with error correction capacity, in which the information stored therein may vary dynamically, according to different physical/chemical parameters.

The invention is applicable in all those sectors where it is necessary to encode information that can vary dynamically (after encoding) for generating variations on the original message which can be identified as information, regardless the conditions in which it transmits the message.

**BACKGROUND OF THE INVENTION**

In recent years, the widespread adoption of communication technologies by society has led to an important breakthrough in mobile and sensor-based communications. More specifically, within sensor technologies it is common to use cameras for obtaining information in the form of images and/or video, as well as in the form of systems for viewing or for the computerised analysis of said information, provided under different visual information processing technologies (for example, in the form of matrix codes, 2D codes, text, photography/video analysis, etc.), and this is also currently highly integrated in society.

Within visual analysis technologies, the information in the form of data acquired by sensors (for example, cameras) must be processed by information encoding and decoding systems, wherein a plurality of devices are in charge of reading said encoding automatically. In the specific case of visual codes (for example, barcodes or QR or "Quick Response" codes), the information is encoded with visual patterns typically forming a matrix code. The visual information stored in said matrix code is captured by a camera and then stored in digital storage means, wherein said information corresponds with the reading of the visual information. In this situation, wherein there is no human intervention, it must be ensured that the information that is encoded is consistent with the information that is decoded, without losses being generated or distortion of information. In this context, if the decoding process is altered (for example, if the message has been corrupted), then the information that is decoded will not be truthful or correct.

There are also a number of lines of research that are extensively dedicated to error detection and correction for preserving the integrity of the decoded information and in recent years have provided various technical solutions for assuring the quality of the processed information, even when errors are produced in the visual information (for example, text corrections or corrections of images captured by the cameras). Therefore, in said technologies, decoding processes also capable of correcting the detected errors, reestablishing the information to a recognisable state. As an example, a word with no meaning in a particular text character recognition process can be "translated" to a word with meaning, close to the received word.

In general, visual information correction systems are fundamentally based on the concept of "distance" between the processed information with errors and the corresponding information without errors. Therefore, by means of the mentioned use of distances between information sequences, different protocols for acting on the information analysed by the system, such as detecting the errors occurred (for example, when the distance is greater than or equal to a pre-established threshold value), or correcting the mentioned errors (for example, by correcting the identified errors if the minimum distance is less than said threshold), can be established on a processed code.

In general, the probability of many errors occurring in a given information sequence (or "word") in a code is much less than the probability of few errors occurring in the same word. This fact is generally used as an argument for using error detection and/or correction (for example, Reed-Solomon algorithms in the case of QR codes) for encoding new information, instead of for correcting the potential errors detected. In processes of this type, a number of documents mostly related to the use of matrix codes in error detection and/or correction systems, such as the patent applications ES 2257480 T3, US 7373581 B2, US 20120188442 A1, US 6685095 B2 or ES 2355423 T3, must be mentioned.

Although the mentioned visual information error correction technologies are generally aimed at replacing said errors with an encoding with meaning, no alternative techniques which provide enhanced information by utilising the presence of said errors in the processed information are known at present in the technical field. In this sense, it is desirable to find new methods for encoding which allow improved messages to be generated with respect to the known alternatives, based on the generation of errors in a controlled and interpretable manner on the encoded visual information. The present invention provides a solution to this need by means of a novel method for visual encoding information, as well as a system implementing said method.

**BRIEF DESCRIPTION OF THE INVENTION**

As described in the preceding section, the present invention is mainly based on utilising the information associated with errors dynamically caused on a code, said errors being considered useful information, such that are utilised the capacities for detecting and/or correcting said errors in a code for extending the valid words thereof, for encoding additional information. That is, the invention essentially proposes a method and a system for encoding information, incorporating same on a visual code, and decoding same, wherein instead of using error detection and correction for restoring the message to its original state, it is used at first for extending the set of valid words and thus being able to extend the interpretation of the message according to the errors which have deliberately damaged it. Enhanced information is thereby generated in said message, thereby enhancing the capacities and functionalities of the code used.

In this context, a first aspect of the present invention relates to a device for storing encoded visual information with error detection capacity, comprising at least two physical layers, one of which is permanent or invariable (for example, printed through unalterable (particularly, unerasable) means, such as for example permanent ink) and contains a visual code with error correction capacity, and at least one layer that is variable according to particular physical or chemical conditions and is superimposed on the permanent layer. The device thereby provides enhanced information coming from the decoding the information comprised in the two layers and encoded in a cooperative manner.

In a preferred embodiment of the invention, the static layer of the device can comprise any type of visual encoding registered on means in a permanent manner, such as printed text or QR code, a data matrix code or BIDI code, among others, such that the device is capable of storing information (which may or may not be encrypted) both in the static layer and through the interpretation of the errors generated on the static layer by the dynamic layer or layers.

Likewise, in a second aspect, the present invention relates to a method for manufacturing the mentioned device, and particularly to a method for creating the dynamic layers that are superimposed on the permanent or invariable layers.

A third aspect of the invention further relates to a method for reading or decoding the information contained in the device for storing encoded visual information corresponding to the first aspect of the invention. Said method for decoding can be applied as a rapid information reading/decoding system which is furthermore independent of light conditions, the reading position, etc., capable of revealing the information that may appear dynamically in the device of the first aspect of the invention.

In a fourth aspect, the invention relates to computer programs implementing either the method for creating dynamic layers or else the method for decoding of the second aspect of the invention.

A fifth aspect relates to the system capable of carrying out the method for decoding of the second aspect of the invention.

The preceding aspects of the invention are more specifically summarised in the set of claims attached to the present document.

The methods for encoding and decoding of the invention, as well as the device and system carrying out said methods, represent an improvement with respect to the systems and methods of the state of the art, by using the errors present in a visual code as useful information that can also be generated and encoded for subsequent decoding thereof. In practice, the invention, therefore, provides, among others, the following improvements:

a) It allows the capacity of storing information in a device that is equivalent in size and appearance to a visual code to be enhanced. The known methods for decoding visual codes only allow the static or invariable information to be extracted (in very rigid and sometimes unreliable reading conditions) on the colour of the sensors. In the case of the present invention, it is possible to store additional information in the dynamic layers which are superimposed on the layer with static or invariable information.

b) The capacity of determining the presence or absence of an ink component corresponding to the presence of a chemical or biological element can be performed much more quickly in the method of the present invention, and the application of further image analysis for locating the areas that do or do not contain colour can be prevented.

c) By encoding the colour in a preferred embodiment of the invention, the method of decoding allows the error to be interpreted as a measurement of the variation in the reading due to light conditions and prevents having to use external lights. To that end, one of the physical layers of the device of the invention can comprise one or more regions coloured in an unalterable manner by way of colour control or reference for analysing the variation of the colour of another of the physical layers of the device. The proposed invention thereby allows the real colour reading to be ensured.

d) It can prevent the need to add special markers in the sensors to orient the reading by utilising the orientation providing visual codes, such as QR codes, for example.

Throughout the present description, there is provided a series of terms which will be interpreted as follows in the scope of the invention:

"Alphabet" is understood to mean a finite set of symbols

$$\mathcal{A} = \{a_1, \ldots, a_q\}$$

wherein the number q is referred to as "root of $\mathcal{A}$".

A "word" of length n is understood as a juxtaposition of n symbols:

$$a = a_{i1}a_{i2} \ldots a_{in}, a_{ik} \in \mathcal{A}.$$

. The set of all the chains of length n (or "n-chains") and

by $\mathcal{A}^*$ the set of all the words that can be formed with the symbols of the alphabet $\mathcal{A}$ is referred to as $\mathcal{A}^n$, i.e.,

$$\mathcal{A}^* = \cup_{n \in \mathbb{N}} \mathcal{A}^n.$$

Given an alphabet $\mathcal{A}$ with root q, a "q-ary code" on $\mathcal{A}$ is referred to as a subset, $\mathcal{C}$, of $\mathcal{A}^*$

$$(\mathcal{C} \subset \mathcal{A}^*).$$

The elements of $\mathcal{C}$ are called codewords (or datawords) or simply "words". The "size", M, of the code indicates the number of elements it contains,

$$M = |\mathcal{C}|.$$

If all the words of the code have fixed length n, $\mathcal{C}$ will be referred to as "block code" with parameters (n, M) or $\mathcal{C}$ is an "(n,M)-code". If $\mathcal{C}$ is not a block code, then it is a code of variable length.

In the present invention, the term "code" refers to a set $\mathcal{C}$, formed by words of length n, such that from q symbols, it is possible to obtain $q^n$ different words. That is, given a code $\mathcal{C}$, the quantity of words the code contains is denoted as M or $|\mathcal{C}|$, and $M \leq q^n$ always.

When establishing communication between an emitter and a receiver, the purpose of any code is to allow the emission and reception of messages. In the context of the invention, the term "message" refers to a set of words of a code.

After emitting a word, it can be said that the word received "contains an error" when it differs by at least one symbol of the emitted word. Therefore, if two codewords differ by a distance d, d errors are needed to convert one to the other. A valid metric for measuring the distance between two words is the so-called "Hamming distance".

"Error correction" is understood to mean any method capable of converting a sequence of symbols not forming a codeword into the closest codeword. In that sense, "distance" between two words will be understood to mean any metric which allows the differences between two words to be measured. Therefore, the word closest to a word $c_0$ will be that word having the smallest distance to $c_0$.

The "minimum distance" of a code will be the minimum difference between any two words thereof.

The most well-known example of codes that allow error correction are the codes obtained by the simple parity method, whereby an additional bit is added to each group of bits (word), which will be 0 or 1 depending on whether the number of 1 contained in the word is even or uneven. In that sense, it can be said that a code "allows error correction" or that it "has error detection capacity" when it is possible to transform the received word into the correct word of the code with the detection and correction system upon emitting a (valid) word and receiving another different (invalid) word. By way of example, a code $\mathcal{C}$ allows k errors to be correct if any two words $c_1$ and $c_2$ having a Hamming distance less than k coincide. In other words, in that case, a code allows k errors to be corrected if and only if the Hamming minimum distance, $d_m$, between any two words therein is at least k+1 ($d_m \geq 2k+1$). An example code which allows error correction is formed by the Reed-Solomon codes commonly used in QR codes.

The "error generation" or "error injection" concepts will be used to refer to any method by means of which are intentionally added sequences of symbols that do not form a valid word (or equivalently do not belong to the code) of a message. These sequences of symbols do not necessarily have to have a length equal to n.

Particularly, the "dynamic error generation" concept refers to the technique capable of generating errors in controlled or predefined positions under dynamic conditions.

"Error condition" will be understood to mean the interpretation given to an error generated or injected in a particular position, particularly as a result of the occurrence of errors as a result of the changes occurring in a dynamic layer. That is, if any type of change occurs in the dynamic layer (for example, after a reagent reacting upon contact with a chemical compound), then the information that would be detected by the error correction algorithm appears, giving rise to an error condition causing the method for decoding of the invention to activate the reinterpretation of said error.

The graphic depiction of a message can be defined as a "visual code". If that message is encoded in a code with error correction capacity, it will be referred to as "visual code with error correction capacity". Examples of visual codes with error correction capacity are barcodes, BIDI codes, a QR code or codes. In the context of the present invention, "visual code", or where appropriate "visual code with error correction capacity", will be understood to mean an element or device comprising the graphic depiction of an encoded message, particularly the printed graphic depiction.

## DESCRIPTION OF THE DRAWINGS

A brief description of each of the figures used to complete the following description of the invention is provided below. Said figures expressly relate to preferred embodiments of the invention which are presented as non-limiting examples thereof.

Figure 1 shows a block diagram depicting the main steps of the method for encoding of the invention according to a preferred embodiment thereof.

Figure 2 shows a block diagram depicting the main steps of the method for decoding of the invention according to a preferred embodiment thereof.

Figure 3 shows a preferred embodiment of the invention, wherein a QR type code having part of its code configured with ink which dynamically changes colour in the presence of a reagent is used. The QR code furthermore has three regions in its corners coloured with non-alterable reference colours which are known prior to analysing the colour information of the QR. These colours therefore serve as "control" colours for purposes of analysing the colour change of the dynamic layer as a result of the reagent present in the ink.

## DETAILED DESCRIPTION OF THE INVENTION

In a first aspect, the present invention relates to a device for storing encoded visual information with error detection capacity, comprising at least two superimposed physical layers:

- a first unalterable static layer comprising the graphic depiction of a message encoded in a code with error correction capacity;
- one or more dynamic layers, the graphic depiction of which may vary, generating errors on the message of the first layer.

In this context, the dynamic layers represent an "extended code", with an extension of the encoded information in the static layer being understood as such, wherein said extended code can be read by corresponding reading means (preferably, computerised optical recognition means for recognising the information present in said layers). Therefore, if the error induced by a change in the dynamic layer causes the word of the code (for example, 01001001110) to become a word that is not in the code (for example, 01001001111), when the error is detected, the word is reinterpreted with two meanings: on one hand, 01001001110 (correction of 01001001111 in the code) will be interpreted. And on the other hand, if 01001001111 belongs to the extended code, it will be interpreted as the word of the extended code or, otherwise, as the word of the extended code that corrects (the closest one) to 01001001111. This extension becomes effective during the method for decoding, which recognises this additional information which is interpreted, therefore enhancing the information that was encoded in the static layer. Therefore, in a preferred embodiment of the invention, the device always comprises a static layer and at least one dynamic layer.

In a preferred embodiment of the invention, at least one of the dynamic layers of information of the device comprises one or more chemical and/or biochemical components, which can modify the optical properties or opacity thereof according to the environmental conditions to which they are subjected and/or to the addition of external reagents. The information provided by the dynamic layer could thereby be read and interpreted by optical recognition means.

In a more preferred embodiment of the invention, at least one of the dynamic layers of information is formed by enzymes, antibodies or by colorimetric substrates, understanding as such chemical and/or biochemical components selected for the development of colorimetric sensors on paper, in solution or on any polymeric support which allows the viewing or reading of the colorimetric change. As an example of said support, can be considered any analyte used in "screening" type test strips or the analytes used in immunochromatographic strips, particularly peptides or polymers.

In another preferred embodiment of the invention, the information contained in the layers making up the device can be encrypted, in order to ensure that it could only be extracted if there is a corresponding decryption code.

In a second aspect, the present invention relates to a method of manufacturing the device of the invention and its dynamic layers, configured for generating errors on the visual code contained in the static layer, thereby enhancing the information providing the device. In the mentioned method, from a visual code comprising static metainformation (i.e., of the static layer), the method for creating dynamic layers of the invention comprises generating a graphic depiction from what will be referred to as encoding the "erroneous information", in which an extended code is generated by means of which the error information is associated with a particular meaning, which allows words with errors (defined in the error condition) and the different positions of the visual code in which the material that is dynamically altered should be located to be interpreted.

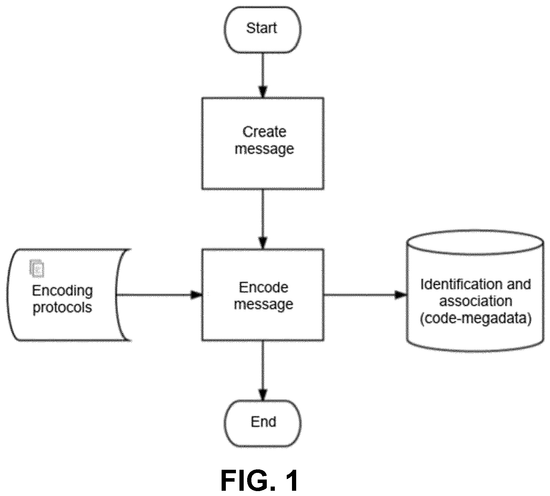

Preferably, the method for encoding of the invention comprises the following steps (Figure 1), which can be performed as many times as there are dynamic layers contained in the device:

- Selecting one or more positions of the visual code of the static layer in which information can be stored such that they introduce code-correctable errors.
- Defining one or more error conditions, which will determine the interpretation made of the error according to the position in which said error is detected.
- Generating the extended code with the encoding the metainformation generated in the previous step.

Each of the steps of the method is described in greater detail below:

- Generating a visual code comprising static metainformation (static layer):

  In this step, which is optional since the method can start from previously created visual codes, the information is converted to valid words for the code The words that are generated in this step will have to be valid for the code and will depend on the visual representation of the encoding used: QR codes, BIDI codes, barcodes, etc. From a practical point of view, in this step information relating to the specific field to which the invention is applied in a given embodiment (for example, a product batch, date, server access URLs, etc.) is typically encoded and can optionally be encrypted.

- Selecting positions of the visual code of the static layer in which information can be stored:

  As previously described, "position" in a visual code is understood to mean a point or region identified by coordinates (x,y), located in the area in which the visual code is represented, whether it is a data area or an error protection area. Visual codes with error correction capacity usually have fixed positions dedicated to the synchronisation, orientation, etc., so in different embodiments of the invention, these positions can optionally be discarded.

From the rest of the positions, those positions which, when modified, introduce code-correctable errors, are selected. These positions are stored and will be the positions that will subsequently contain the means altered by physical or chemical conditions.

- Defining error conditions:

In this step, metainformation defining error conditions and the meaning that these conditions will have is introduced. Once the basic information to be stored in the visual code is created, it is necessary to decide how to interpret said conditions with each error, depending on the position in which this occurs. That is, the type of modifications associated with each code position, that the words encoded in the dynamic layer can undergo is defined in this step. Subsequently, the interpretation of each of the possible modifications is defined.

In one embodiment of the invention, in which the error committed upon reading the colour of the sensor implemented in a QR code is to be interpreted, the following could be performed:

  i) The information (codewords) that will contain the visual code, as well as the corresponding colours, is defined in the static layer. This information can be related to the company, batch and other logistic characteristics.

  ii) The information defined in the previous step is encoded by means of a given encoding protocol (for example, a conventional protocol for Reed-Solomon type QR codes), the codewords of which will be at least partially replaced in the areas of protection against QR errors.

  iii) Likewise, some codewords will be printed in the QR with non-sensing ink and others with sensing ink. Therefore, the codewords printed with sensing ink may experience a colour variation with respect to the codewords marked with non-sensing ink.

  iv) When the QR is subject to optical recognition, the codewords will be decoded by means of the Reed-Solomon protocol, specifying the distance existing between the colour read and the colour with which it was originally printed. This gives the reference distance to be applied at the time of reading (light conditions, camera conditions, etc., and correction factors could optionally be applied), and the percentage of variation with respect to the original colour is analysed.

- Generating the extended code with the encoding of the metainformation generated in the previous step:

In this step, the information of the errors generated in the previous step (metainformation) must be associated with the layer of information contained in the static layer, specifying how the set of detected errors must be interpreted. The extended code which confers validity to certain information marked as erroneous during the decoding of the message in the receiver is thereby constructed.

In a particular embodiment of the invention, the method is completed with a step of the physical generation, particularly printing or deposition, of the dynamic layer which will deposit the alterable means in those previously selected positions. This physical generation will preferably be performed by means of printing each of the superimposed layers forming the device, using chemical or biochemical components. Therefore, for the example based on the colour error analysis described above, the error condition is created by adding a dynamic layer on the static layer such that, with sensing ink, are printed areas which have a colour that changes over time (for example, in the presence of a bacterium, gas, chemical agent, etc.), such that new information about the encoded information appears in the visual code of the static layer which, therefore, acquires a new meaning when interpreted as an error condition.

In a third aspect, the present invention also relates to a method of decoding information contained in the device of the invention, comprising the identification of words marked with error and their correction, by first using a word of the code and then a word of the extended code. More specifically, said method comprises the following steps:

- Selecting a word marked as an error.
- Analysing the error:

    ◦ Returning the word of the code with the one having a smaller distance with respect to the word selected in the first step.

- Interpreting the error:

  ◦ Returning the word of the extended code having a smaller distance with respect to the word selected in the first step.

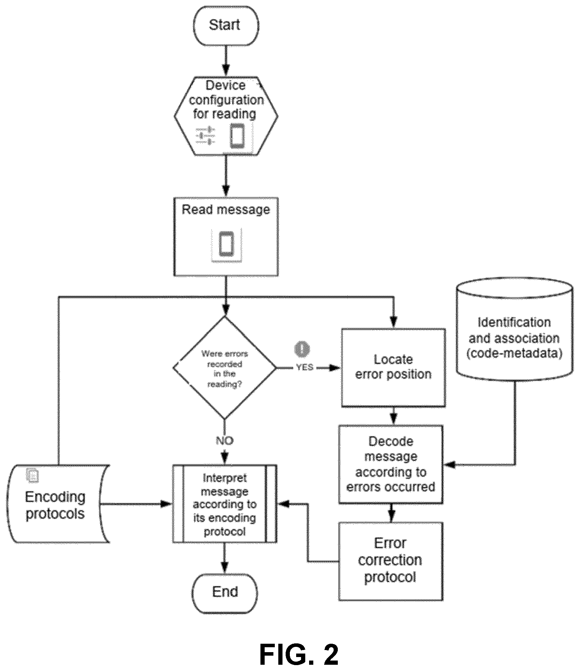

The method of decoding is fundamentally based on the analysis of the message when said message is read, as well as in the extraction of the words encoding same (see Figure 2). If the words are not marked with errors, then the word is considered valid and, therefore, their interpretation or meaning will be unique. If, on the other hand, the word is marked with an error, then it is possible to correct same (in the event that the code allows error correction) and replace it with a word of the code that is valid and in respect of which it is separated the least (said analysis can be based, for example, on the Hamming distance). Additionally, and according to the method proposed by the invention, a layer of metainformation associated with a dynamic layer which will generate errors in the encoded information and allows said errors to be interpreted and each word validated is created during the encoding phase. During the decoding process, instead of ignoring errors and correcting the erroneous word(s), they will be considered valid within the subcode.

In a particular embodiment, the algorithm used for error correction is a Reed-Solomon type algorithm. Likewise, in another particular embodiment in which the information contained in the device of the invention is encrypted, the method of decoding also comprises the decryption of that information.

A fourth object of the invention relates to a computer program comprising instructions for carrying out the method for creating dynamic layers of the invention and/or the method for decoding of the invention. Said object can thereby be performed in the form of source code, object code or in an intermediate code between source code and object code, such as in a partially compiled form or in any other form suitable for use in the implementation of the processes according to the invention. Particularly, computer programs also comprise cloud applications implementing the method for creating dynamic layers of the invention and/or the method for decoding of the invention. Said programs can be arranged on or within a support suitable for reading, referred to as "carrier means" or simply, "carrier". The carrier means can be any entity or device capable of carrying the program. When the program is incorporated in a signal that can be transported directly by a cable or other device or means, the carrier means can consist of said cable or other device or means. As a variant, the carrier means may be an integrated circuit in which the program is included, with the integrated circuit being adapted for executing or for being used in the execution of the corresponding processes.

By way of example, the programs can be incorporated in storage means, such as a ROM memory, a CD ROM memory or a ROM semiconductor memory, a USB memory, or a magnetic recording medium, for example, a floppy disk or a hard disk. Alternatively, the programs could be supported in a transmittable carrier signal. For example, it could be an electrical or optical signal that may be transported through an electric or optical cable, by radio or by any other means.

A fifth aspect of the present invention relates to a system for reading encoded visual information with error detection capacity, which allows the information contained in the devices of the invention, particularly the devices created by superimposing one or more dynamic layers created with the method for creating dynamic layers of the invention on a visual code with error correction capacity, to be decoded, and comprising the means needed for carrying out the method for decoding of the invention.

More specifically, the system of the invention preferably comprises:

- Means for capturing or acquiring images.
- Information processing means suitable for executing instructions configured for carrying out the method for decoding of the invention.
- Optionally, at least one external server and communication means configured for connecting the system to said external server and allowing the exchange of information between both.

Examples of means for capturing images may vary between a digital camera, CCD sensors or infrared code readers. In a preferred embodiment, the system for reading codes of the invention comprises a CCD sensor.

As an example of information processing means, can be used any processor with capacity to execute the program instructions implementing the method for decoding of the invention.

The system can perform processing of decoding without having to exchange information with any other external computational element (such as data servers, for example). However, in other particular embodiments of the invention, the system can also comprise one or more servers and communication means between same. Examples of said communication means are communication devices using WIFI or Bluetooth, or USB connections, among others. In another particular embodiment, the system comprises a communication antenna that allows access to other computing environments (networks) through research or commercial protocols for data exchange in communication networks, including the Internet.

Lastly, in another optional embodiment, the system further comprises data output means on which information can be shown, such as a display, for example.

Another object of the invention relates to computer-readable storage means, comprising program instructions capable of causing a computer to carry out the method for creating dynamic layers of the invention and/or the method for decoding of the invention.

Lastly, a final object of the invention relates to transmittable signals comprising program instructions capable of causing a computer to carry out the method for creating dynamic layers of the invention and/or the method for decoding of the invention.

According to the objects of the invention described above, several examples of applying said objects are described below:

- Method for colour control:

Another direct application of the invention is being able to have control means for devices using cameras to read information associated with colour. Said application allows deviations in reading the colour occurring due to the light conditions as a result of the substrate of the inks used, the paper, the process of manufacturing the camera, algorithms for compressing the image captured through the camera, etc., to be corrected. In this context, as a result of the interpretation of the error information in the reading, the invention makes it possible to correct said colour information in the form of metainformation. As an example of this application and for the correct interpretation of the colour information, in a preferred embodiment of the invention it is possible to carry out a method of validating colour by means of one or more reference colours. For this purpose, it is possible to use a QR code equipped with one or more regions coloured with said reference colours, which are preferably non-alterable. In addition to these regions, the QR will have another part of its code configured with ink which will dynamically change colour in the presence of a reagent (following the general embodiment of the invention). The reference colours can be previously known when analysing the colour information of the QR, thus serving as "control" colours for the purpose of analysing their colour change as a consequence of the reagent present in the ink.

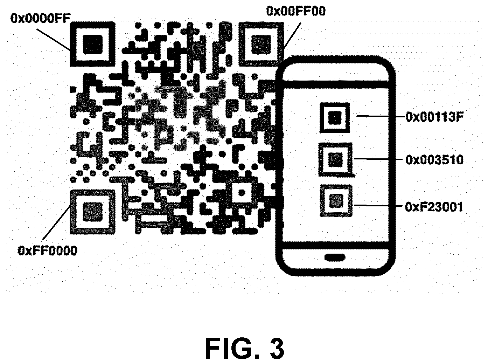

Figure 3 of the present document shows, by way of illustration, the analysis of a QR code configured with a pattern of three reference colours in its corners: 0x0000FF (blue), 0x00FF00 (green) and 0xFF0000 (orange). When the image of said QR code is scanned (for example, obtaining said image by means of the camera of a mobile device), the colour information of the corners is perceived as 0x00113F (blue), 0x003510 (green) and 0xF23001 (orange). Therefore, if the mobile device is configured with the reference information of said colours, it can calculate deviations in colour reading caused by light conditions, the parameters of the camera itself, etc., and which are not strictly due to the dynamic alteration of the colours of its sensitive layer. As a result of the reference colours, a software application in charge of analysing the information could interpret the rest of the message of the QR code, using the information of the corners and the differences obtained in their reading by way of calibrating colour of the camera. Accordingly, said calibration will allow the colour change of the central region of the QR code to be determined with greater precision (for example, by applying the variation obtained with a Reed-Solomon algorithm).

- Method of obtaining useful data for diagnosis:

Another application of the invention is its use for obtaining useful information for medical diagnosis, and more specifically, its use in the development of kits for diagnosing diseases or disease markers which allow information to be obtained *in situ* and in time real. There are a number of systems on the market, for example immunochromatographic test strips, lab-on-chip devices, etc., which can benefit from a device according to the invention.

- Smart packaging:

In another particular embodiment, the invention can be used in a packaging which incorporates at least one device for encoding, characterised in that at least one of the dynamic layers of the code is formed by a chemical or biochemical compound that can alter its optical properties or opacity, according to the physical or chemical conditions produced inside and/or outside the packaging. By way of example, a packaging according to the invention can consist of a transparent film for vacuum packaging or packaging in a controlled atmosphere, having a code of the invention printed on its inner part, and in which said visual code contains a first static layer of information with data relating to the packaged product (packaging date, type of product, etc.), and a second dynamic layer formed by a chemical compound that reacts in the presence of oxygen and achieves opacity when the level of oxygen inside the bag exceeds a particular threshold.

- Pregnancy test:

In another particular embodiment, by means of the devices of the invention can be improved the application of the pregnancy test based on the presence of the hormone called human chorionic gonadotropin (hCG). The test determines the presence or absence of this hormone in urine, with the conclusion of whether or not the woman is pregnant.

In this case, a QR code printed on a test strip is used, with some biochemically modified bits with the anti-hCG monoclonal and polyclonal antibodies, together with the colorimetric indicator and produced by a sandwich type assay, an agglutination inhibition assay or a lateral flow immunoassay. If the immunological reaction occurs, the test is positive and there is a colour code to inform the person of the result.

## Claims

1. A device for storing encoded information with error correction capacity, comprising:

   - a first physical layer, comprising an unalterable graphic printout of a message encoded by means of a code with error correction capacity;
   - at least a second physical layer, comprising an alterable graphic printout according to the physical/chemical properties of said second physical layer, wherein said alteration generates one or more errors in the information of the message encoded in the first physical layer;

   **characterised in that** the message of the first physical layer and the errors generated therein by alteration of the graphic printout of the second physical layer are encoded according to an extended code, wherein said extended code comprises one or more error definition and correction rules in said message, from the optical information associated with the superimposition formed by the unalterable graphic printout of the first physical layer and by the alterable graphic printout of the second physical layer, such that the information associated with the errors provides enhanced information with respect to the code of the message of the first physical layer.

2. The device according to the preceding claim, wherein the second physical layer is printed with one or more chemical and/or biochemical components with variable concentration or optical properties, according to one or more physical/chemical conditions.

3. The device according to the preceding claim, wherein the variable optical property comprises the printout colour of the second physical layer.

4. The device according to the preceding claim, wherein the first physical layer comprises one or more regions coloured by way of colour control or reference for analysing the colour of the second physical layer.

5. The device according to any of claims 2-4, wherein the chemical and/or biochemical components of the second physical layer comprise:

   - one or more first reagents, the concentration or optical properties of which are variable upon reacting with at least second reagents; and/or
   - one or more compounds, the concentration or optical properties of which are variable in the presence of a bacterium, gas or biological or biochemical agent.

6. The device according to any of the preceding claims, wherein the message printed in the first physical layer comprises a QR-type encoding code, a barcode, a BIDI code and/or data matrix code.

7. A method of manufacturing a device according to any of the preceding claims, **characterised in that** it comprises the following steps:

   - a first physical layer is arranged on the layer that prints unalterable graphic information, wherein said information comprises a message encoded by means of a code, and wherein said code comprises one or more error definition and correction rules in said message, in the reading thereof by optical recognition means for recognising same; wherein one or more of said errors forms an extended code with the code of the message;
   - at least a second physical layer is arranged on the first physical layer, wherein said second physical layer comprises an alterable graphic printout, overprinted on the unalterable graphic printout of the first physical layer, and wherein said second physical layer is configured for generating, with the alteration of the graphic printout thereof, one or more errors in the message of the first physical layer, according to the extended code for encoding same.

8. A system for decoding encoded information, with error correction capacity, comprising:

   - a device according to any of claims 1-6;
   - optical recognition means for the superimposition formed by the unalterable graphic printout of the first physical layer and by the alterable graphic printout of the second physical layer;
   - processing means for processing the information acquired by the optical recognition means, configured by means of hardware and/or software for decoding the message of the first physical layer and one or more errors generated therein by alteration of the graphic printout of the second physical layer of the device,

   the system **characterised in that:**
   the message of the first physical layer and the errors generated therein by alteration of the graphic printout of the second physical layer of the device are encoded according to an extended code, wherein said extended code comprises one or more error definition and correction rules in said message from the reading information of the optical recognition means, such that said errors provide enhanced information with respect to the code of the message of the first physical layer.

9. The system according to the preceding claim, wherein the information processing means comprise one or more servers configured with decoding means for decoding the message of the first physical layer and the errors of the second physical layer, according to the extended code for encoding same.

10. A method for processing information contained in a device according to any of claims 1-6, carried out by a system according to any of claims 8-9, **characterised in that** comprises, at least, the following steps:

- acquiring information, with the optical recognition means of the system, about the superimposition formed by the unalterable graphic printout of the first physical layer and by the alterable graphic printout of the second physical layer;
- analysing, with the processing means of the system, the information obtained in the previous step, identifying one or more codewords associated with an error generated in the message of the first physical layer by alteration of the graphic printout of the second physical layer of the device, and correcting said information by first using a word of the code and then a word of the extended code.

11. The method according to the preceding claim, wherein the identification of the codewords associated with an error comprises applying a metric which comprising calculating the Hamming distance.

12. The method according to any of claims 10-11, wherein error correction comprises using a Reed-Solomon algorithm.

13. Computer-readable storage means comprising program instructions capable of causing a computer to carry out the method according to any of claims 10-12.

14. A transmittable signal comprising program instructions configured for causing a computer to carry out the method according to any of claims 10-12.

15. Use of a device according to any of claims 1-6 or of a system according to any of claims 8-9 in a food packaging, in a disease detection kit or in a pregnancy screening device.

Start

Create
message

Encoding
protocols

Encode
message

Identification and
association
(code-megadata)

End

# FIG. 1

Start

Device
configuration
for reading

Read message

Were errors
recorded
in the
reading? — YES → Locate
error position

NO

Identification
and association
(code-metadata)

Decode
message
according to
errors occurred

Encoding
protocols → Interpret
message
according to
its encoding
protocol

Error
correction
protocol

End

# FIG. 2

FIG. 3

<table>
<tr><td colspan="2">**INTERNATIONAL SEARCH REPORT**</td><td>International application No.<br>PCT/ES2020/070800</td></tr>
</table>

**A. CLASSIFICATION OF SUBJECT MATTER**

**See extra sheet**

According to International Patent Classification (IPC) or to both national classification and IPC

**B. FIELDS SEARCHED**

Minimum documentation searched (classification system followed by classification symbols)
G06K, H03M

Documentation searched other than minimum documentation to the extent that such documents are included in the fields searched

Electronic data base consulted during the international search (name of data base and, where practicable, search terms used)

EPODOC, INVENES

**C. DOCUMENTS CONSIDERED TO BE RELEVANT**

| Category* | Citation of document, with indication, where appropriate, of the relevant passages | Relevant to claim No. |
|---|---|---|
| A | WO 2018175281 A1 (TEMPTIME CORP) 27/09/2018, abstract WPI; abstract EPODOC; figures; claims | 1-15 |
| A | US 2012193260 A1 (BALTZ KYLE L ET AL.) 02/08/2012, abstract WPI; abstract EPODOC; figures; claims | 1-15 |
| A | AU 2009202557 A1 (CANON KK) 20/01/2011, Abstract WPI; abstract EPODOC; figures; claims | 1-15 |
| A | WO 2006049430 A1 (COLORZIP MEDIA INC ET AL.) 11/05/2006, abstract WPI; abstract EPODOC; figures; claims | 1-15 |
| A | US 2019257822 A1 (SCHERR THOMAS F) 22/08/2019, abstract WPI; abstract EPODOC; figures; claims | 1-15 |

☐ Further documents are listed in the continuation of Box C.  ☒ See patent family annex.

| | |
|---|---|
| * Special categories of cited documents:<br>"A" document defining the general state of the art which is not considered to be of particular relevance.<br>"E" earlier document but published on or after the international filing date<br>"L" document which may throw doubts on priority claim(s) or which is cited to establish the publication date of another citation or other special reason (as specified)<br>"O" document referring to an oral disclosure use, exhibition, or other means.<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other documents , such combination being obvious to a person skilled in the art<br>"&" document member of the same patent family |
| Date of the actual completion of the international search<br>06/04/2021 | Date of mailing of the international search report<br>**(07/04/2021)** |
| Name and mailing address of the ISA/<br><br>OFICINA ESPAÑOLA DE PATENTES Y MARCAS<br>Paseo de la Castellana, 75 - 28071 Madrid (España)<br>Facsimile No.: 91 349 53 04 | Authorized officer<br>A. López Ramiro<br><br>Telephone No. 91 3495322 |

Form PCT/ISA/210 (second sheet) (January 2015)

## INTERNATIONAL SEARCH REPORT
Information on patent family members

International application No.

PCT/ES2020/070800

| Patent document cited in the search report | Publication date | Patent family member(s) | Publication date |
|---|---|---|---|
| WO2018175281 A1 | 27.09.2018 | US2020234019 A1 | 23.07.2020 |
| | | BR112019019502 A2 | 28.04.2020 |
| | | | 09.12.2019 |
| | | DE202018006287U U1 | 15.11.2019 |
| | | | 28.11.2019 |
| | | KR20190128228 A | 12.11.2019 |
| | | DE112018001462T T5 | 31.10.2019 |
| | | | 07.11.2019 |
| | | CN110447036 A | 27.09.2018 |
| | | AU2018239238 A1 | 05.02.2020 |
| | | AU2018239238 A2 | 06.01.2021 |
| | | CA3057307 A1 | 06.07.2017 |
| | | EP3602391 A1 | 28.01.2020 |
| | | EP3602391 A4 | -------------- |
| US2012193260 A1 | 02.08.2012 | US2017193260 A1 | 18.04.2018 |
| | | US10546172 B2 | 19.03.2015 |
| | | ---------------------- | 27.02.2018 |
| | | MX355420 B | 27.07.2012 |
| | | US2015076028 A1 | 28.07.2012 |
| | | US9902523 B2 | 25.09.2018 |
| | | MX2012001352 A | 01.07.2014 |
| | | CA2765979 A1 | 01.08.2012 |
| | | CA2765979 C | -------------- |
| AU2009202557 A1 | 20.01.2011 | US8763809 B2 | 01.07.2014 |
| | | EP2481677 A1 | 01.05.2014 |
| WO2006049430 A1 | 11.05.2006 | ---------------------- | 29.08.2013 |
| | | NONE | |
| | | ---------------------- | |
| | | USRE44982E E | 13.06.2013 |
| | | US2014119647 A1 | 30.05.2013 |
| | | US2013221105 A1 | 30.05.2013 |
| | | US2013148888 A1 | 09.04.2013 |
| | | US2013136361 A1 | 10.12.2008 |
| | | US2013136354 A1 | 20.03.2009 |
| | | USRE44139E E | 11.05.2006 |
| | | RU2007120766 A | 20.04.2010 |
| | | RU2349957 C1 | 11.05.2006 |
| | | US2006097062 A1 | 06.07.2010 |
| | | US7702162 B2 | 16.05.2006 |
| | | US2006098241 A1 | 05.12.2006 |
| | | US7751629 B2 | 16.05.2006 |
| | | KR20060044806 A | 05.12.2006 |
| | | KR100653885B B1 | 25.05.2006 |
| | | KR20060044805 A | 04.08.2010 |
| | | KR100653886B B1 | 25.05.2006 |
| | | JP2006134337 A | 06.10.2010 |
| | | JP4515999B B2 | 18.07.2007 |
| | | JP2006134336 A | 29.07.2009 |
| | | JP4557866B B2 | 12.12.2007 |
| | | EP1807796 A1 | 12.03.2014 |
| | | EP1807796 A4 | 11.05.2006 |
| | | CN101088100 A | |
| | | CN101088100B B | |
| | | CA2586274 A1 | |

## INTERNATIONAL SEARCH REPORT

Information on patent family members

International application No.

PCT/ES2020/070800

| Patent document cited in the search report | Publication date | Patent family member(s) | Publication date |
|---|---|---|---|
| | | CA2586274 C | 17.07.2012 |
| US2019257822 A1 | 22.08.2019 | CA3091428 A1 | 22.08.2019 |
| | | WO2019161359 A1 | 22.08.2019 |

Form PCT/ISA/210 (patent family annex) (January 2015)

## INTERNATIONAL SEARCH REPORT

International application No.

PCT/ES2020/070800

### CLASSIFICATION OF SUBJECT MATTER

*G06K19/08* (2006.01)
*G06K19/18* (2006.01)
*G06K9/03* (2006.01)
*H03M13/00* (2006.01)
*G06K7/10* (2006.01)

**EP 4 080 411 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- ES 2257480 T3
- US 7373581 B2
- US 20120188442 A1
- US 6685095 B2
- ES 2355423 T3